# EUROPEAN PATENT APPLICATION

(11) **EP 4 821 741 A1**
(43) Date of publication of application: **14.10.2026**
(21) Application number: 26170951.3
(22) Date of filing: 07.04.2026
(51) Int. Cl.: B60L 3/00, B60K 1/04, B60L 3/04, B60L 50/60, B60L 53/16, B60L 58/18, H01R 13/66, H01R 13/639, H01R 13/641, H02J 3/32

(54) **SYSTEMS AND METHODS FOR LOCKING BATTERY UNIT AND ELECTRIC VEHICLE**

(30) Priority: 07.04.2025 NL 2040134
(71) Applicant: Staad Groep B.V., 5465 TC Veghel (NL)
(72) Inventor: STAADEGAARD, Pieter Johannes Maria, 5465 TC Veghel (NL); VAN HAL, Waltherus Jahannes Martinus, 5465 TC Veghel (NL)
(74) Representative: Patentwerk B.V.

(57) **Abstract**

The present disclosure provides a system comprising an electric vehicle and a battery unit, configured to be removably arranged on or at least partially in the electric vehicle and configured to be electrically connected to the electric vehicle. The system further comprises a locking mechanism, configured to mechanically connect the battery unit, when arranged on or in the electric vehicle, to the electric vehicle, and safety system. The safety system comprises a first sensor configured to detect whether there is an electrical connection between the electric vehicle and the battery unit, and a controller, configured to receive signals from the first sensor, and enable or disable the locking mechanism based on the received signals.

## Description

### FIELD OF INVENTION

The present disclosure relates generally to battery locking systems for electric vehicles. In some aspects, the disclosure pertains to a system comprising an electric vehicle, a removable battery unit, a locking mechanism, and a safety system. The disclosure may concern a method for decoupling a battery unit from an electric vehicle. Furthermore, the disclosure may relate to a battery unit configured to be removably arranged on or partially in an electric vehicle with a locking mechanism for mechanical connection.

### BACKGROUND

Electric vehicles with removable battery units have gained increasing attention in recent years. These systems allow for quick battery swapping, potentially reducing downtime for recharging. However, the coupling and decoupling of high-voltage battery units to and from electric vehicles presents several challenges and risks.

Prior art systems may include basic mechanical latches or electrical connectors for attaching battery units. Some designs incorporate simple interlocks to prevent electrical connection before mechanical securing. However, these systems may not adequately address all safety concerns.

Risks involved in coupling or decoupling battery units may include:
1. Electrical shock hazards if high-voltage connections are exposed or improperly disconnected
2. Mechanical damage to connectors or components if alignment is incorrect during installation
3. Potential for battery unit to become loose or detached during vehicle operation if not securely locked
4. Fire or thermal runaway risks if damaged connections cause short circuits
5. Unintended power transfer or system activation if electrical isolation is not maintained during swapping

Additionally, improper sequencing of electrical and mechanical connections/disconnections may lead to arcing, connector wear, or control system errors. There may also be risks associated with handling heavy battery units during manual exchange processes.

In some cases, existing systems may lack comprehensive safety interlocks or may not provide clear indication of connection status to operators. This could lead to attempts to operate vehicles with improperly installed batteries or premature disconnection of energized systems.

Addressing these challenges may involve developing more sophisticated locking mechanisms, implementing multi-stage connection processes, and incorporating advanced sensing and control systems to ensure safe and reliable battery unit exchanges.

### SUMMARY

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

In a first aspect, a system is provided. The system comprises comprising an electric vehicle, a battery unit, configured to be removably arranged on or at least partially in the electric vehicle and configured to be electrically connected to the electric vehicle, a locking mechanism, configured to mechanically connect the battery unit, when arranged on or in the electric vehicle, to the electric vehicle, and a safety system. The safety system comprises a first sensor configured to detect whether there is an electrical connection between the electric vehicle and the battery unit, and a controller. The controller is configured to receive signals from the first sensor, and enable or disable the locking mechanism based on the received signals.

This system provides enhanced safety for electric vehicles with removable battery units by ensuring that the locking mechanism is only enabled when there is no electrical connection. This reduces the risk of breaking electrical connections, and therefore electrical hazards and mechanical failures during battery replacement operations.

In a preferred embodiment, the controller is further configured to enable the locking mechanism when the received signal indicates that there is no electrical connection between the electric vehicle and the battery unit.

In a preferred embodiment, the electric vehicle and the battery unit comprise complementary electrical connectors and wherein the first sensor is configured to detect whether the complementary electrical connectors are connected.

In a preferred embodiment, the complementary electrical connectors comprise a at least one shortest pin and wherein the first sensor is configured to detect whether the at least one shortest pin is connected. In such an embodiment, the controller is further configured to enable or disable power transfer between the electric vehicle and the battery unit based on the received signals. By disabling power transfer when the shortest pin, for example the proximity pilot pin, disconnects, the risk of arcing between the remaining pins is reduced.

In a preferred embodiment, the complementary electrical connectors comprise at least one longest pin and wherein the first sensor is configured to detect whether the at least one longest pin is connected. In such an embodiment, the controller is further configured to enable or disable the locking mechanism based on the received signals. By enabling the locking mechanism only when the at least one longest pin, for example the Control Pilot Pin, disconnects, the risk of breaking still connected remaining pins is reduced.

In a preferred embodiment, the system further comprises a further locking mechanism configured to mechanically connect the complementary electrical connectors. In such embodiments, the safety system further comprises a second sensor configured to detect whether there is a voltage on the complementary electronical connectors. The controller is also further configured to receive further signals from the second sensor and enable or disable the further locking mechanism based on the received further signals. In a preferred embodiment, the controller is further configured to enable the further locking mechanism when the received signal indicates that there is no electrical connection between the electric vehicle and the battery unit. By mechanically locking the complementary connectors when a voltage is still present between them, risk of short circuits and arcing is reduced further.

In a preferred embodiment, the safety system comprises a further connector, complementary to either of the complementary electrical connectors of the electric vehicle and the battery unit. In such an embodiment, the first sensor is configured to detect connection between the further connector and either of the complementary electrical connectors. The first sensor detects that there is no electrical connection between the electric vehicle and the battery unit when it detects that there is a connection between the further connector and either of the complementary electrical connectors of the electric vehicle and the battery unit. Use of such a dummy connector ensures that cables and electrical connectors are not hanging loose and therefore at less risk of getting stuck and getting damaged if a battery unit is removed from the electric vehicle.

The achieved advantages may apply for various vehicles. In a preferred embodiment, the electric vehicle is a truck or an earth mover vehicle, such as an excavator. In a preferred embodiment, the electric vehicle comprises one or more built-in batteries configured to be charged by the battery unit. In a preferred embodiment, the electric vehicle comprises an electric drive and/or one or more electric motors for driving effector arms and/or end effectors.

In a second aspect, a method is provided for decoupling a battery unit arranged on or at least partially in an electric vehicle, from said electric vehicle, preferably in a system according to any one of the preceding claims. The method comprises:
- electrically disconnecting a first electrical connector, being part of either the battery unit or the electric vehicle, from a second electrical connector, being part of the other of the battery unit or the electric vehicle,
- detecting, by a first sensor, whether there is no electrical connection between the electric vehicle and the battery unit;
- enabling, based on a first signal of the first sensor, a locking mechanism, configured to mechanically connect the battery unit, when arranged on or at least partially in the electric vehicle, to the electric vehicle;
- mechanically disconnecting, by the locking mechanism, the battery unit from the electric vehicle.

This system provides enhanced safety for electric vehicles with removable battery units by ensuring that the locking mechanism is only enabled when there is no electrical connection. This reduces the risk of breaking electrical connections, and therefore electrical hazards and mechanical failures during battery replacement operations.

In a preferred embodiment, the method further comprises:
- detecting, by a second sensor, whether there is no voltage on the first and second electrical connector;
- enabling, based on a second signal of the second sensor, a further locking mechanism configured to mechanically connect the complementary electrical connectors;
- mechanically disconnecting, by the further locking mechanism, the first and second electrical connector.

In a preferred embodiment, the method further comprises:
- connecting either one of the first or second electrical connector to a further connector, complementary to either of the complementary electrical connectors of the electric vehicle and the battery unit;
wherein detecting whether there is no electrical connection between the electric vehicle and the battery unit comprises detecting that there is no electrical connection between the electric vehicle and the battery unit when detecting a connection between the further connector and the either one of the first or second electrical connector.

Use of such a dummy connector ensures that cables and electrical connectors are not hanging loose and therefore at less risk of getting stuck and getting damaged if a battery unit is removed from the electric vehicle.

In further preferred embodiments of these methods, the electric vehicle is a truck or an earth mover vehicle, such as an excavator.

In a fourth aspect, a system is provided. The system includes an electric vehicle; a battery unit, configured to be removably arranged on or at least partially in the electric vehicle and configured to be electrically connected to the electric vehicle; a locking mechanism, configured to mechanically connect the battery unit, when arranged on or in the electric vehicle, to the electric vehicle; a safety system, comprising: a first sensor configured to detect whether there is an electrical connection between the electric vehicle and the battery unit; a second sensor configured to detect whether there is a mechanical connection between the electric vehicle and the battery unit; a controller, configured to: receive signals from the first sensor and the second sensor; enable or disable power transfer between the electric vehicle and the battery unit based on the received signals.

This system provides enhanced safety for electric vehicles with removable battery units by ensuring that power transfer is only enabled when both electrical and mechanical connections are properly established. This reduces the risk of electrical hazards and mechanical failures during battery replacement operations.

The system may further include complementary electrical connectors on the electric vehicle and the battery unit, and a further connector, complementary to either of the complementary electrical connectors of the electric vehicle and the battery unit. The first sensor may be configured to detect connection between the further connector and either of the complementary electrical connectors, wherein the first sensor detects that there is no electrical connection between the electric vehicle and the battery unit when it detects that there is a connection between the further connector and either of the complementary electrical connectors of the electric vehicle and the battery unit. This configuration allows for a safe intermediate state during battery replacement, where the electrical connection is temporarily established with a dummy connector, preventing accidental power transfer during the replacement process.

The safety system may further comprise a locking system configured to mechanically connect the electric vehicle to the battery unit. The second sensor may be configured to detect whether the locking system is locked, wherein the second sensor detects that there is no mechanical connection between the electric vehicle and the battery unit when the locking system is unlocked, and/or detects that there is a mechanical connection between the electric vehicle and the battery unit when the locking system is locked. This feature ensures that the battery unit is securely fastened to the electric vehicle before enabling power transfer, reducing the risk of mechanical failures or accidents due to an improperly secured battery.

The controller may be further configured to enable power transfer between the electric vehicle and the battery unit when the controller receives a signal from the first sensor indicating that an electrical connection is detected and a signal from the second sensor indicating that a mechanical connection is detected. This configuration provides a double-check mechanism, ensuring that both electrical and mechanical connections are properly established before allowing power transfer, thereby enhancing the overall safety of the system.

The controller may be further configured to disable power transfer between the electric vehicle and the battery unit when the controller receives a signal from the first sensor indicating that no electrical connection is detected or a signal from the second sensor indicating that no mechanical connection is detected. This feature adds an additional layer of safety by promptly disabling power transfer if either the electrical or mechanical connection is compromised, preventing potential hazards.

The electric vehicle may be a truck or an earth mover vehicle, such as an excavator. This application of the system to heavy-duty vehicles demonstrates its versatility and robustness in demanding operational environments.

The electric vehicle may comprise one or more built-in batteries configured to be charged by the battery unit. This feature allows for extended operation time and flexibility in power management for the electric vehicle.

The electric vehicle may comprise an electric drive and/or one or more electric motors for driving effector arms and/or end effectors. This configuration enables the application of the safety system to a wide range of electric vehicles with various functionalities, from transportation to construction and material handling.

In a fifth aspect, a method for coupling a battery unit to an electric vehicle is provided. The method comprises: removing a first electrical connector, being part of either the battery unit or the electric vehicle, from a complementary further connector, such as a dummy connector; electrically connecting the first electrical connector to a second electrical connector, being part of the other of the battery unit or the electric vehicle, detecting, by a first sensor, whether there is an electrical connection between the electric vehicle and the battery unit; mechanically locking, by a locking mechanism, the battery unit to the electric vehicle and detecting, by a second sensor, whether there is a mechanical connection between the electric vehicle and the battery unit; receiving, by a controller, signals from the first sensor and the second sensor and enabling power transfer between the electric vehicle and the battery unit based on the received signals.

This method provides a systematic and safe approach to coupling a battery unit to an electric vehicle, ensuring that both electrical and mechanical connections are properly established before enabling power transfer.

In a sixth aspect, a method for decoupling a battery unit from an electric vehicle is provided. The method comprises: electrically disconnecting a first electrical connector, being part of either the battery unit or the electric vehicle, from a second electrical connector, being part of the other of the battery unit or the electric vehicle, connecting the first electrical connector to a complementary further connector, such as a dummy connector; detecting, by a first sensor, whether there is no electrical connection between the electric vehicle and the battery unit; mechanically unlocking, by a locking mechanism, the battery unit from the electric vehicle and detecting, by a second sensor, whether there is no mechanical connection between the electric vehicle and the battery unit; receiving, by a controller, signals from the first sensor and the second sensor and disabling power transfer between the electric vehicle and the battery unit based on the received signals.

This method ensures a safe decoupling process for the battery unit from the electric vehicle, preventing potential electrical hazards and mechanical accidents during the removal process.

In a seventh aspect, a system is provided. The system includes an electric vehicle; a battery unit, configured to be removably arranged on or at least partially in the electric vehicle and configured to be electrically connected to the electric vehicle; a locking mechanism, configured to mechanically connect the battery unit, when arranged on or in the electric vehicle, to the electric vehicle, the locking mechanism comprising: a protruding member and a receptacle member, one of which is attached to the electric vehicle and the other one of which is attached to the battery unit; wherein at least one of the protruding member and the receptacle member is configured to be moved in a first direction with respect to the other; wherein the protruding member and the receptacle member each comprise a contact surface, at least one of which is inclined with respect to the first direction; wherein the protruding member and the receptacle member are mutually arranged such that, when the battery unit is arranged on or at least partially in the electric vehicle and when the at least one of the protruding member and the receptacle member is moved in the first direction, the contact surfaces come into contact and move past each other, urging the protruding member and receptacle member to also at least partially move in a second direction, perpendicular to the first direction, with respect to each other.

This locking mechanism design provides a secure and efficient way to mechanically connect the battery unit to the electric vehicle, utilizing inclined surfaces to create a tight fit and prevent unintended disconnection.

Various configurations are conceivable. The protruding member may be attached to the electric vehicle and the receptacle member may be attached to the battery unit. The protruding member may be attached to the battery unit and the receptacle member may be attached to the electric vehicle. The protruding member may be configured to be moved in the first direction with respect to the receptacle member and wherein the receptacle member may be fixedly attached. The protruding member may be fixedly attached and wherein the receptacle member may be configured to be moved in the first direction with respect to the protruding member. The contact surface of the protruding member may be inclined with respect to the first direction and/or wherein the contact surface of the receptacle member may be inclined with respect to the first direction.

Including the moveable part in the battery unit ensures locking is available in an otherwise dead (e.g. without charge) electric vehicle. At the same time, including the moveable part in the electric vehicle means it is not necessary at the battery unit and the latter is generally moved around more, meaning that there the moveable part would have the larger risk of being damaged.

The inclined surfaces facilitate a secure locking action and help to align the battery unit correctly during installation.

The contact surfaces may have complementary inclinations with respect to the first direction such that the coming into contact of the contact surfaces comprises said contact surfaces coming flat into contact with each other. This feature ensures a tight and secure fit between the protruding member and the receptacle member, enhancing the stability of the mechanical connection.

The second direction may be a vertical direction, preferably downward direction. This configuration utilizes gravity to assist in securing the battery unit, enhancing the reliability of the locking mechanism.

The first direction may be at least partially horizontal, preferably horizontal. A horizontal movement for engaging the locking mechanism can be easier to implement and control, especially for large or heavy battery units.

The system may further comprise one or more resilient elements, such as springs or bodies made of resilient material such as rubber, wherein the resilient elements are arranged such that, when the battery unit is arranged on or at least partially in the electric vehicle, the battery unit at least partially rests on said resilient elements and/or the one or more resilient elements are in between a support surface of the electric vehicle and the battery unit. These resilient elements provide shock absorption and vibration dampening, protecting the battery unit and improving the overall durability of the system. In a preferred embodiment, the one or more resilient elements may be fixedly attached to the electric vehicle. This configuration simplifies the battery unit design and ensures that the resilient elements remain with the vehicle during battery replacement. The one or more resilient elements may be fixedly attached to the battery unit.

The locking mechanism may further comprise a driving mechanism, such as a piston or linear actuator, configured to move at least one of the protruding member and the receptacle member in the first direction. The driving mechanism automates the locking process, improving ease of use and ensuring consistent application of the locking force.

In a eight aspect, a battery unit is provided. The battery unit is configured to be removably arranged on or at least partially in an electric vehicle that comprises a first member selected from a protruding member and a receptacle member, the battery unit being further configured to be electrically connected to the electric vehicle, the battery unit comprising: a locking mechanism configured to mechanically connect the battery unit to the electric vehicle when the battery unit is arranged on or in the electric vehicle, the locking mechanism comprising: a complementary second member configured to engage with the first member; wherein the second member is configured to move in a first direction; wherein the first member and the second member each comprise a contact surface, at least one of which is inclined with respect to the first direction; wherein the second member is arranged such that, when the battery unit is arranged on or at least partially in the electric vehicle and when the second member is moved in the first direction, the contact surfaces come into contact and move past each other, urging the first member and second member to also at least partially move in a second direction, perpendicular to the first direction, with respect to each other.

This battery unit design incorporates a complementary locking mechanism that ensures secure attachment to the electric vehicle, enhancing safety and reliability during operation. Including the actuator and movable member with the battery unit ensures that locking is available even if the battery unit is arranged in an otherwise dead (i.e. being without power) electric vehicle.

The foregoing general description of the illustrative embodiments and the following detailed description thereof are merely exemplary aspects of the teachings of this disclosure and are not restrictive.

### BRIEF DESCRIPTION OF FIGURES

The invention will be further elucidated by several illustrative examples and with reference to the appended non-limitative figures, in which:
- Figures 1a and 1b show block diagrams of a system according to the invention in different states of operation;
- Figures 2a and 2b show a battery unit according to the invention and part of an electric vehicle, as may be part of a system according to the invention.
- Figures 3a-c show a locking mechanism as may be part of a system according to the invention in different states of operation.

### DETAILED DESCRIPTION

The following description sets forth exemplary aspects of the present disclosure. It should be recognized, however, that such description is not intended as a limitation on the scope of the present disclosure. Rather, the description also encompasses combinations and modifications to those exemplary aspects described herein.

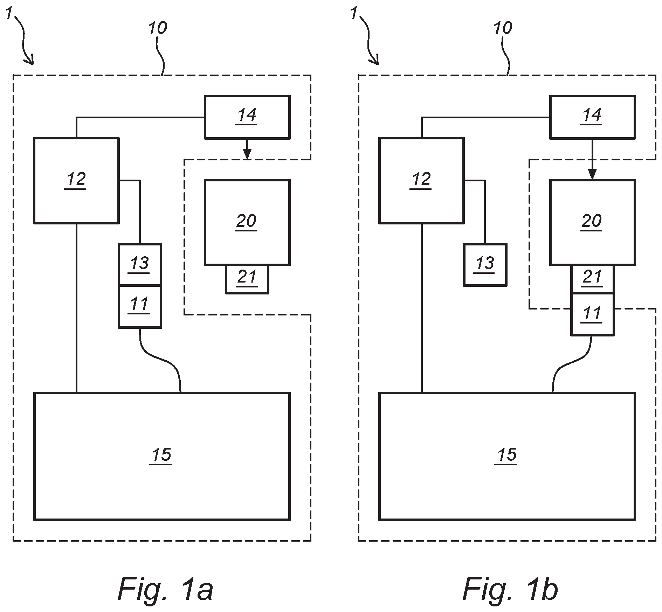

Figures 1a and 1b schematically illustrate a system 1 according to the invention in different operational states. In both figures, system 1 comprising an electric vehicle 10 and a battery unit 20. The electric vehicle 10 includes a connector 11, a control unit 12, a dummy connector 13, a locking mechanism 14, and electronic components 15. The battery unit 20 includes a connector 21 complementary to the connector 11 of the electric vehicle 10.

The control unit 12 may receive signals indicating the status of the electrical connection between the battery unit 20 and the electric vehicle 10, and enable or disable locking mechanism 14 based thereon.

Locking mechanism 14 may be generally described by its two states: locked and unlocked. When locking mechanism 14 is locked, it mechanically connects battery unit 20 to electric vehicle 10. When locking mechanism 14 is unlocked, it does not mechanically connect battery unit 20 to electric vehicle 10.

Locking mechanism 14 may further be described by it being enabled or disabled. Alternatively phrased, the locking system may be turned at least partially on or off. When locking mechanism 14 is enabled, its state may be changed. For example, a locking mechanism that is locked and enabled, may be unlocked. This changing of the state may be achieved automatically or partially manually. When locking mechanism 14 is disabled, its state may not be changed. For example, a locking mechanism that is locked and disabled, may not be unlocked.

Embodiments are conceivable in which locking mechanism 14 is fully automatic. In such embodiments, controller 12 may both enable and disable, as well as lock and unlock locking mechanism 14. Specifically, controller 12 may mechanically disconnected battery unit 20 and electric vehicle 10.

Embodiments are also conceivable in which locking mechanism 14 is partially automatic and partially manual. In such embodiments, locking mechanism 14 may comprise a manually controllable locking pin, which mechanically connects battery unit 20 and electric vehicle 10, and an electrically controllable retaining pin, which may retain the locking pin. Controller 12 may enable locking system 14 by controlling the retaining pin but may not mechanically disconnect battery unit 20 and electric vehicle 10. The actual unlocking or disconnecting step may be performed manually.

In some embodiments, control unit 12 may receive signals indicating the status of the electrical and mechanical connections between the battery unit 20 and the electric vehicle 10 and enable or disable power transfer between the two based thereon.

The dummy connector 13 may serve as a safe storage location for the connector 11 when the battery unit 20 is disconnected and may allow the control unit 12 to determine that the connector 11 is not connected to the battery unit 20.

The locking mechanism 14 may provide mechanical security when the battery unit 20 is installed. Embodiments are conceivable in which locking mechanism 14 is electric, hydraulic or pneumatic. Other types of locking mechanisms may be used as well.

The electronic components 15 may include a build in battery unit, for example a high-voltage battery unit, as well as a battery management system that monitors and controls the state of charge, temperature, and overall health of battery units - either or both the build-in one or the replaceable battery unit 20. In some embodiments, the electronic components 15 may include a power inverter that converts DC power from the battery to AC power for driving electric motors or other high-voltage systems within the electric vehicle 10.

In the state depicted in Figure 1a, the connector 11 of the electric vehicle 10 is connected to the dummy connector 13 and locking mechanism 14 is at least partially retracted, representing a configuration where the battery unit 20 may be in the process of being removed or installed. Sensors included in dummy connector 13 (e.g. a first sensor) and in locking mechanism 14 (e.g. a second sensor) may detect whether their respective electric or mechanical connections are present or not.

Specifically, as connector 11 is connected to dummy connector 13, controller 12 may conclude that connector 11 is not connected to battery unit 20 or specifically connector 21. Based thereon, controller 12 may enable locking mechanism 14.

In some embodiments, in the state depicted in figure 1a power transfer between the electric vehicle 10 and battery unit 20 may be disabled by controller 12. In a preferred embodiment, connectors 11, 21 may include a plurality of pins, including a Proximity Pilot pin, for example as the one described in 61851/1. A sensor may be provided which detects whether the proximity pilot pin is connected. Specifically, if such a sensor determines that the PP pin is not connected, power transfer between the electric vehicle 10 and battery unit 20 may be disabled by controller 12.

In some implementations, the connectors may incorporate various types of sensors to detect the presence of a complementary connector. For example, the connector 11 or dummy connector 13 may include proximity sensors (inductive or capacitive), optical sensors, or mechanical switches that are actuated when the complementary connector is properly inserted. These sensors enable the system to verify whether electrical connections are properly established between components.

Embodiments are also conceivable in which the electrical connection between battery unit 20 and electric vehicle 10 is monitored or determined in different ways.

For example, using a high voltage interloop (HVIL), which relies on a low voltage signal to detect whether connectors 11, 21 are connected. In such an example, a sensor is provided which may detect said low voltage signal.

In another example, connectors 11, 21 may include a plurality of pins, including a control pilot pin (CP Pin), for example one as described in 61851/1. In such an example, a sensor is provided which may detect whether the control pilot pin is connected to a complementary connector and depending thereon, it may be determined whether there is an electrical connection between the battery unit 20 and electric vehicle 10. Specifically, if the sensor determined that the CP pin is not connected, it may be determined that there is no electrical connection between battery unit 20 and electric vehicle 10 and locking mechanism 14 may be enabled.

Additionally, the system may utilize other detection technologies such as RFID, where a reader in one connector detects a tag in the complementary connector, or electrical continuity sensors that complete a circuit only when connectors are properly mated. These detection mechanisms provide the control unit 12 with reliable information about connection status, enabling appropriate safety responses based on the current state of the system.

In some implementations, the locking mechanism may incorporate, as second sensor, position sensors to detect its state. For example, Hall effect sensors may be used to detect the position of the locking pins or actuators. These sensors can detect changes in magnetic fields as the locking components move, providing precise information about whether the mechanism is fully engaged, partially engaged, or disengaged. Alternatively, optical encoders may be employed to track the movement and position of locking components, offering high-resolution feedback on the mechanism's state.

In other aspects, the locking mechanism may utilize force or pressure sensors to determine its engagement status. For instance, strain gauges may be integrated into key structural components of the locking mechanism to measure the forces exerted when the battery unit is secured. These sensors can detect whether the proper clamping force is applied, indicating a fully engaged lock. Additionally, piezoelectric sensors may be used to detect vibrations or impacts associated with the locking process, providing information about the smoothness of the engagement and potentially alerting to any anomalies in the locking sequence.

In the state depicted in Figure 1b, the connector 11 of the electric vehicle 10 is connected to the connector 21 of the battery unit 20 and locking mechanism 14 is at least partially extended, representing a configuration where the battery unit 20 is installed. Specifically, as connector 11 is not connected to dummy connector 13, controller 12 may conclude that connector 11 is connected to battery unit 20 or specifically connector 21. Alternatively and/or additionally, sensors may be included in connector 11 to detect whether it is connected to battery unit 20 or specifically connector 21.

In some embodiments, in the state depicted in figure 1b, locking mechanism 14 may be disabled.

In some embodiments, in the state depicted in figure 1b, power transfer between the electric vehicle 10 and battery unit 20 may be enabled by controller 12.

One method for decoupling a battery unit arranged on or at least partially in an electric vehicle, from said electric vehicle, preferably in a system as described in any one of the aforementioned embodiments, may include several steps. A first electrical connector, being part of either the battery unit or the electric vehicle, may be electrically disconnected from a second electrical connector, being part of the other of the battery unit or the electric vehicle. A first sensor may detect whether there is no electrical connection between the electric vehicle and the battery unit. A locking mechanism, configured to mechanically connect the battery unit, when arranged on or at least partially in the electric vehicle, to the electric vehicle, may be enabled based on the first signal of the first sensor. The locking mechanism may then mechanically disconnect the battery unit from the electric vehicle.

A further method, specifically one for coupling the battery unit 20 to the electric vehicle 10, may involve several steps. Initially, the battery unit 20 may be positioned near or partially within the electric vehicle's designated battery compartment. The connector 11 of the electric vehicle 10 may then be disconnected from the dummy connector 13 and connected to the complementary connector 21 of the battery unit 20. As this connection is made, sensors in the connectors may detect the electrical coupling and send signals to the control unit 12. Simultaneously or subsequently, the locking mechanism 14 may be actuated, moving from a retracted position to an extended position to mechanically secure the battery unit 20 in place. The control unit 12 may verify both the electrical and mechanical connections before enabling power transfer between the battery unit 20 and the electric vehicle 10.

A further method, specifically one for decoupling the battery unit 20 from the electric vehicle 10 may follow a reverse sequence. The process may begin with the control unit 12 disabling power transfer between the battery unit 20 and the electric vehicle 10. The locking mechanism 14 may then be actuated to move from its extended position to a retracted position, releasing the mechanical hold on the battery unit 20. Following this, the connector 11 of the electric vehicle 10 may be disconnected from the connector 21 of the battery unit 20. The connector 11 may then be connected to the dummy connector 13, which may serve as a safe storage location and may signal to the control unit 12 that the battery unit 20 is disconnected. Once these steps are completed, the battery unit 20 may be physically removed from the electric vehicle's battery compartment.

The control unit 12 or controller, together with one or more of the aforementioned sensors, may be considered a safety system as they operate together to improve safety of the user of the system.

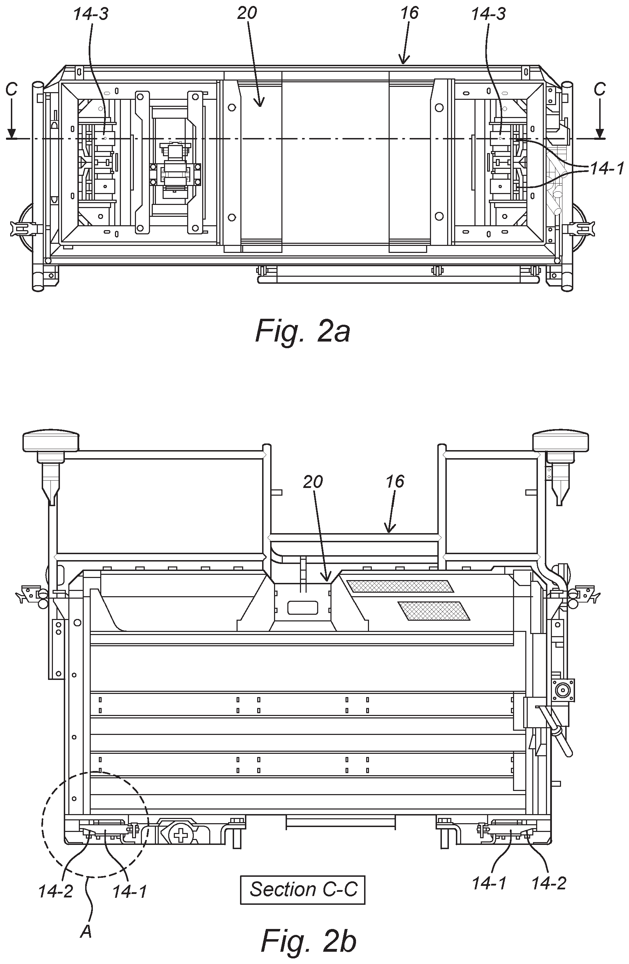

Figures 2a and 2b illustrate a battery unit 20 and a frame 16 as the part of electric vehicle 10 that battery unit 20 may be supported by. Figure 2a shows a bottom view of the battery unit 20, while Figure 2b presents a cross-sectional side view along line C-C of Figure 2a. In addition, these figures show parts of the locking mechanism 14.

In the embodiments shown here, locking mechanism 14 comprises multiple locking pins 14-1, positioned below battery unit 20, at various locations in frame 16. These locking pins 14-1 may be designed to engage with corresponding eyelets 14-2 attached to or integrally formed with battery unit 20. Actuators 14-3 may be responsible for moving the locking pins 14-1 between extended or retracted positions. In the extended position, locking pins interact with eyelets 14-2 to lock the battery unit 20 in place. The extended position may therefore be called the locking or locked position. In the retracted position, locking pins disengage from eyelets 14-2 to unlock the battery unit 20. The retracted position may therefore be called the unlocking or unlocked position. In some implementations, the actuators 14-3 may be hydraulic, pneumatic, or electric devices capable of precise control over the locking pin 14-1 movement.

In alternative embodiments, the locking pins 14-1 and actuators 14-3 may be part of the battery unit 20 instead of the electric vehicle 10. In such embodiments, the eyelets 14-2 would be attached to or integrally formed with the electric vehicle 10 or more specifically frame 16. This reversed configuration would maintain the same functional relationship between components while allowing for different design considerations, such as easier maintenance of the locking mechanism 14 or different weight distribution between the vehicle and battery unit 20. The operation principles would remain similar, with the actuators 14-3 moving the locking pins 14-1 between extended and retracted positions to engage or disengage with the eyelets 14-2.

Figure 2b shows frame 16, which may form the support or mounting surface for the battery unit 20. The actuators 14-3 may be visible on either side, illustrating their positioning relative to the locking pins 14-1 and eyelets 14-2.The locking pins 14-1 and eyelets 14-2 may be seen at the outer edges of the cross-section, demonstrating their alignment and interaction when the battery unit 20 is in place. This arrangement may allow for secure attachment of the battery unit 20 to the electric vehicle 10 when the locking mechanism 14 is engaged.

In some embodiments, the battery unit 20 may include additional features not explicitly shown, such as cooling systems, internal battery management electronics, or structural reinforcements. The frame 16 of the electric vehicle 10 may also incorporate channels, guides, or other features to assist in the proper alignment and installation of the battery unit 20.

This configuration may allow for efficient and secure installation and removal of the battery unit 20, potentially enabling quick battery swaps or maintenance operations in various applications, including earth moving vehicles or other heavy machinery.

The electric vehicle 10 may be an earth mover vehicle. Earth mover vehicles may include various types of heavy machinery used in construction, mining, and earthwork operations.

The electric vehicle 10 may be an earth mover vehicle. Earth mover vehicles may include various types of heavy machinery used in construction, mining, and earthwork operations. Examples of earth mover vehicles include excavators, which may have a boom, stick, and bucket for digging and moving large amounts of earth; bulldozers, which are tracked vehicles that may be equipped with a large metal blade at the front for pushing and moving soil, rubble, or other materials; wheel loaders, which may have a large bucket at the front, mounted on wheels, for scooping and transporting loose materials; scrapers, which may have a cutting edge to scrape up earth and a bowl to collect and transport the material; graders, which may have a long blade used to create flat surfaces during earthwork operations; trenchers, which may be used to dig trenches for pipes, electrical lines, or drainage systems; backhoe loaders, which are versatile machines that may combine a loader bucket on the front with a backhoe on the rear; dump trucks, which, while not strictly earth movers, may be used in conjunction with other earth moving equipment to transport excavated materials; skid steer loaders, which are compact machines that may be used for digging and moving materials in tight spaces; and draglines, which are large excavators that may be used in surface mining operations to remove overburden and extract minerals.

In some cases, these earth mover devices may be equipped with electronic components 15 such as electric drivetrains or hybrid systems, allowing them to benefit from removable battery units as described in the invention.

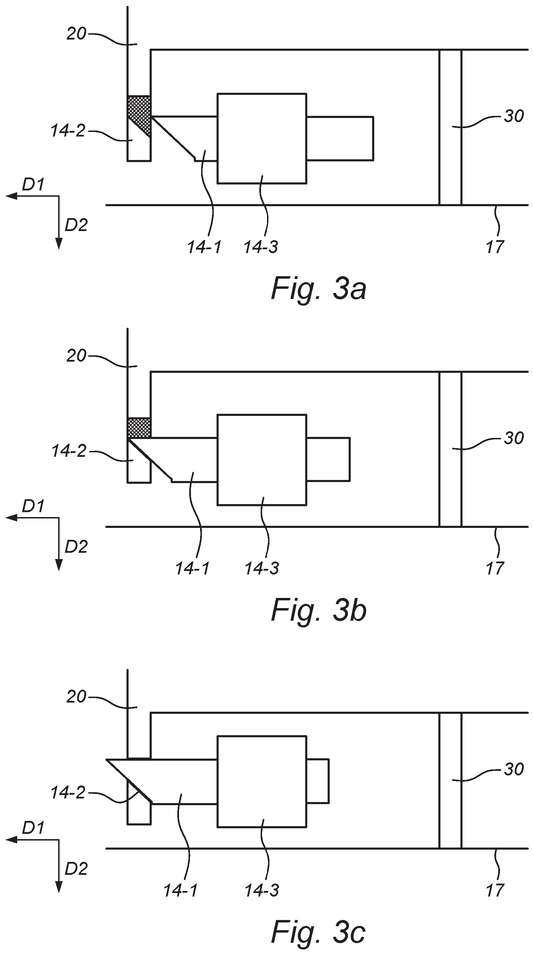

Figure 3a illustrates a side view of a locking mechanism 14 arrangement in a retracted or unlocked position. The figure shows a battery unit 20 positioned above a support surface 17, with a resilient element 30 placed between them. An eyelet 14-2, attached to or part of the battery unit 20, is aligned with a locking pin 14-1. The locking pin 14-1 is connected to an actuator 14-3, which is capable of moving the locking pin 14-1 in a horizontal direction D1. In this initial state, the locking pin 14-1 is positioned adjacent to, but not yet engaged with, the eyelet 14-2. This configuration represents the system 1 before the locking process has begun, with the battery unit 20 positioned for potential engagement with the locking mechanism 14. The resilient element 30 may be compressed partially due to the weight of battery unit 20. Preferably, resilient element 30 is, when locking mechanism 14 is unlocked, not compressed completely.

Figure 3b depicts an intermediate state of the locking mechanism 14 engagement process. In this configuration, the actuator 14-3 has begun to move the locking pin 14-1 in the horizontal direction D1 towards the eyelet 14-2. As the locking pin 14-1 makes initial contact with the eyelet 14-2, it may start to exert a downward force on the battery unit 20. Figure 3c illustrates the fully engaged or locked position of the locking mechanism 14. In this state, the actuator 14-3 has moved the locking pin 14-1 in the horizontal direction D1 to fully engage it with the eyelet 14-2. The locking pin 14-1 may have traveled through the eyelet 14-2. This configuration may represent the final, secure state of the battery unit 20 installation, where both horizontal and vertical movements have combined to create a stable and locked position.

The contact between the inclined contact surfaces of the locking pin 14-1 and eyelet 14-2 urges the battery unit 20 downward in direction D2. In the embodiment shown here, resilient element 30 is compressed further and battery unit 20 is urged downward until it reaches support surface 17. This interaction between the locking pin 14-1 and the eyelet 14-2 may be initiated by their inclined contact surfaces, causing the vertical movement in direction D2, demonstrating the dual-directional nature of the locking mechanism's 14 operation.

Embodiments are conceivable in which battery unit 20 is not urged downward until it reaches support surface 17. A space then remains between eyelet 14-2 and surface 17. In such embodiments, further compressed resilient element 30 may also already provide firm support to battery unit 20 and in such embodiments support surface 17 supports battery unit 20 indirectly.

In further embodiments, the locking mechanism 14 may be configured with an inverted arrangement where the eyelet 14-2 is movable in the horizontal direction D1 instead of the locking pin 14-1. In this configuration, the actuator 14-3 may be connected to the eyelet 14-2, allowing it to move horizontally towards a stationary locking pin 14-1. The engagement process may still result in a downward force on the battery unit 20 as the inclined surfaces of the eyelet 14-2 and locking pin 14-1 interact. This inverted arrangement may provide advantages in certain design scenarios, such as allowing for a more compact locking mechanism 14 or facilitating easier maintenance access to the moving parts.

In further embodiments, the locking pin 14-1 and actuator 14-3 may be integrated into the battery unit 20 rather than the electric vehicle 10. In this configuration, the eyelet 14-2 may be attached to or formed as part of the frame 16 of the electric vehicle 10. Additionally, in some implementations, only one of either the locking pin 14-1 or the eyelet 14-2 may feature an inclined surface. For example, the locking pin 14-1 may have a flat end while the eyelet 14-2 incorporates an inclined surface, or vice versa. This single-incline design may simplify manufacturing processes while still achieving the desired locking and downward force application on the battery unit 20 during engagement.

The actuator 14-3 may be considered just one possible implementation of a protruding member. The eyelet 14-2 may be considered as one possible implementation of a receptacle member. The system 1 may incorporate various other designs for these components while maintaining the functional relationship described. For instance, the protruding member may take the form of a sliding bolt, a cam mechanism, a hook or a pivoting arm, while the receptacle member may be implemented as a slot, a groove, or a catch. In some cases, the specific geometry and configuration of these members may be adapted to suit particular design requirements or operational constraints of the electric vehicle 10 and battery unit 20, while still enabling the described movement in the first and second directions during the engagement process.

The application further comes with the following clauses:
1. A system comprising:
   an electric vehicle;
   a battery unit, configured to be removably arranged on or at least partially in the electric vehicle and configured to be electrically connected to the electric vehicle;
   a locking mechanism, configured to mechanically connect the battery unit, when arranged on or in the electric vehicle, to the electric vehicle;
   a safety system, comprising:
      a first sensor configured to detect whether there is an electrical connection between the electric vehicle and the battery unit;
      a second sensor configured to detect whether there is a mechanical connection between the electric vehicle and the battery unit;
      a controller, configured to:
   receive signals from the first sensor and the second sensor;
   enable or disable power transfer between the electric vehicle and the battery unit based on the received signals.
2. The system of clause 1, wherein the electric vehicle and the battery unit comprise complementary electrical connectors, and wherein the safety system comprises a further connector, complementary to either of the complementary electrical connectors of the electric vehicle and the battery unit;
   wherein the first sensor is configured to detect connection between the further connector and either of the complementary electrical connectors;
   wherein the first sensor detects that there is no electrical connection between the electric vehicle and the battery unit when it detects that there is a connection between the further connector and either of the complementary electrical connectors of the electric vehicle and the battery unit.
3. The system of clause 1 or 2, wherein the safety system further comprises a locking system configured to mechanically connect the electric vehicle to the battery unit;
   wherein the second sensor is configured to detect whether the locking system is locked;
   wherein the second sensor detects that there is no mechanical connection between the electric vehicle and the battery unit when the locking system is unlocked, and/or detects that there is a mechanical connection between the electric vehicle and the battery unit when the locking system is locked.
4. The system of any one of clauses 1-3, wherein the controller is further configured to enable power transfer between the electric vehicle and the battery unit when the controller receives a signal from the first sensor indicating that an electrical connection is detected and a signal from the second sensor indicating that a mechanical connection is detected.
5. The system of any one of clauses 1-4, wherein the controller is further configured to disable power transfer between the electric vehicle and the battery unit when the controller receives a signal from the first sensor indicating that no electrical connection is detected or a signal from the second sensor indicating that no mechanical connection is detected.
6. The system of any one of clauses 1-5, wherein the electric vehicle is a truck or an earth mover vehicle, such as an excavator.
7. The system of any one of clauses 1-6, wherein the electric vehicle comprises one or more built-in batteries configured to be charged by the battery unit.
8. The system of any one of clauses 1-7, wherein the electric vehicle comprises an electric drive and/or one or more electric motors for driving effector arms and/or end effectors.
9. A method for coupling a battery unit to an electric vehicle, preferably in a system of any one of clauses 1-8, the method comprising:
   removing a first electrical connector, being part of either the battery unit or the electric vehicle, from a complementary further connector, such as a dummy connector;
   electrically connecting the first electrical connector to a second electrical connector, being part of the other of the battery unit or the electric vehicle,
   detecting, by a first sensor, whether there is an electrical connection between the electric vehicle and the battery unit;
   mechanically locking, by a locking mechanism, the battery unit to the electric vehicle and detecting, by a second sensor, whether there is a mechanical connection between the electric vehicle and the battery unit;
   receiving, by a controller, signals from the first sensor and the second sensor and enabling power transfer between the electric vehicle and the battery unit based on the received signals.
10. A method for decoupling a battery unit from an electric vehicle, preferably in a system of any one of clauses 1-8, the method comprising:
   electrically disconnecting a first electrical connector, being part of either the battery unit or the electric vehicle, from a second electrical connector, being part of the other of the battery unit or the electric vehicle,
   connecting the first electrical connector to a complementary further connector, such as a dummy connector;
   detecting, by a first sensor, whether there is no electrical connection between the electric vehicle and the battery unit;
   mechanically unlocking, by a locking mechanism, the battery unit from the electric vehicle and detecting, by a second sensor, whether there is no mechanical connection between the electric vehicle and the battery unit;
   receiving, by a controller, signals from the first sensor and the second sensor and disabling power transfer between the electric vehicle and the battery unit based on the received signals.
11. The method of clause 9 or 10, wherein the first sensor is configured to detect connection between the further connector and first electrical connector, wherein the first sensor detects that there is no electrical connection between the electric vehicle and the battery unit when it detects that there is a connection between the further connector and the first electrical connector.
12. The method of clause 9, 10 or 11, wherein the second sensor is configured to detect whether the locking system is locked, wherein the second sensor detects that there is no mechanical connection between the electric vehicle and the battery unit when the locking system is unlocked, and/or detects that there is a mechanical connection between the electric vehicle and the battery unit when the locking system is locked.
13. The method of any one of clauses 9-12, wherein the controller is further configured to enable power transfer between the electric vehicle and the battery unit when the controller receives a signal from the first sensor indicating that an electrical connection is detected and a signal from the second sensor indicating that a mechanical connection is detected.
14. The method of any one of clauses 9-13, wherein the controller is further configured to disable power transfer between the electric vehicle and the battery unit when the controller receives a signal from the first sensor indicating that no electrical connection is detected or a signal from the second sensor indicating that no mechanical connection is detected.
15. The method of any one of clauses 9-14, wherein the electric vehicle is a truck or an earth mover vehicle, such as an excavator.
16. The method of any one of clauses 9-15, wherein the electric vehicle comprises one or more built-in batteries configured to be charged by the battery unit.
17. The method of any one of clauses 9-16, wherein the electric vehicle comprises an electric drive and/or one or more electric motors for driving effector arms and/or end effectors.
18. A system comprising:
   an electric vehicle;
   a battery unit, configured to be removably arranged on or at least partially in the electric vehicle and configured to be electrically connected to the electric vehicle;
   a locking mechanism, configured to mechanically connect the battery unit, when arranged on or in the electric vehicle, to the electric vehicle, the locking mechanism comprising:
      a protruding member and a receptacle member, one of which is attached to the electric vehicle and the other one of which is attached to the battery unit;
      wherein at least one of the protruding member and the receptacle member is configured to be moved in a first direction with respect to the other;
      wherein the protruding member and the receptacle member each comprise a contact surface, at least one of which is inclined with respect to the first direction;
      wherein the protruding member and the receptacle member are mutually arranged such that, when the battery unit is arranged on or at least partially in the electric vehicle and when the at least one of the protruding member and the receptacle member is moved in the first direction, the contact surfaces come into contact and move past each other, urging the protruding member and receptacle member to also at least partially move in a second direction, perpendicular to the first direction, with respect to each other.
19. The system of clause 18, wherein the protruding member is attached to the electric vehicle and the receptacle member is attached to the battery unit.
20. The system of clause 18 or 19, wherein the protruding member is attached to the battery unit and the receptacle member is attached to the electric vehicle.
21. The system of any one of clauses 18-20, wherein the protruding member is configured to be moved in the first direction with respect to the receptacle member and wherein the receptacle member is fixedly attached.
22. The system of any one of clauses 18-21, wherein the protruding member is fixedly attached and wherein the receptacle member is configured to be moved in the first direction with respect to the protruding member.
23. The system of any one of clauses 18-22, wherein the contact surface of the protruding member is inclined with respect to the first direction and/or wherein the contact surface of the receptacle member is inclined with respect to the first direction.
24. The system of any one of clauses 18-23, wherein the contact surfaces have complementary inclinations with respect to the first direction such that the coming into contact of the contact surfaces comprises said contact surfaces coming flat into contact with each other.
25. The system of any one of clauses 18-24, wherein the second direction is a vertical direction, preferably downward direction.
26. The system of any one of clauses 18-25, wherein the first direction is at least partially horizontal, preferably horizontal.
27. The system of any one of clauses 18-26, further comprising one or more resilient elements, such as springs or bodies made of resilient material such as rubber, wherein the resilient elements are arranged such that, when the battery unit is arranged on or at least partially in the electric vehicle, the battery unit at least partially rests on said resilient elements and/or the one or more resilient elements are in between a support surface of the electric vehicle and the battery unit.
28. The system of any one of clauses 18-27, wherein the one or more resilient elements are fixedly attached to the electric vehicle.
29. The system of any one of clauses 18-28, wherein the one or more resilient elements are fixedly attached to the battery unit.
30. The system of any one of clauses 18-29, wherein the locking mechanism further comprises a driving mechanism, such as a piston or linear actuator, configured to move at least one of the protruding member and the receptacle member in the first direction.
31. The system of any one of clauses 18-30, wherein the electric vehicle is a truck or an earth mover vehicle, such as an excavator.
32. The system of any one of clauses 18-31, wherein the electric vehicle comprises one or more built-in batteries configured to be charged by the battery unit.
33. The system of any one of clauses 18-32, wherein the electric vehicle comprises one or more electromotors.
34. A battery unit configured to be removably arranged on or at least partially in an electric vehicle that comprises a first member selected from a protruding member and a receptacle member, the battery unit being further configured to be electrically connected to the electric vehicle, the battery unit comprising:
   a locking mechanism configured to mechanically connect the battery unit to the electric vehicle when the battery unit is arranged on or in the electric vehicle, the locking mechanism comprising:
   a complementary second member configured to engage with the first member;
   wherein the second member is configured to move in a first direction;
   wherein the first member and the second member each comprise a contact surface, at least one of which is inclined with respect to the first direction;
   wherein the second member is arranged such that, when the battery unit is arranged on or at least partially in the electric vehicle and when the second member is moved in the first direction, the contact surfaces come into contact and move past each other, urging the first member and second member to also at least partially move in a second direction, perpendicular to the first direction, with respect to each other.
35. The battery unit of clause 34, wherein the protruding member is configured to be moved in the first direction with respect to the receptacle member and wherein the receptacle member is fixedly attached.
36. The battery unit of clause 34 or 35, wherein the protruding member is fixedly attached and wherein the receptacle member is configured to be moved in the first direction with respect to the protruding member.
37. The battery unit of any one of clauses 34-36, wherein the contact surface of the protruding member is inclined with respect to the first direction and/or wherein the contact surface of the receptacle member is inclined with respect to the first direction.
38. The battery unit of any one of clauses 34-37, wherein the contact surfaces have complementary inclinations with respect to the first direction such that the coming into contact of the contact surfaces comprises said contact surfaces coming flat into contact with each other.
39. The battery unit of any one of clauses 34-38, wherein the second direction is a vertical direction, preferably downward direction.
40. The battery unit of any one of clauses 34-39, wherein the first direction is at least partially horizontal, preferably horizontal.
41. The battery unit of any one of clauses 34-40, further comprising one or more resilient elements, such as springs or bodies made of resilient material such as rubber, fixedly attached to a side of the battery unit, preferably the lower side, wherein the resilient elements are arranged such that, when the battery unit is arranged on or at least partially in the electric vehicle, the battery unit at least partially rests on said resilient elements and/or the one or more resilient elements are in between a support surface of the electric vehicle and the battery unit.

It will be apparent that the invention is not limited to the working examples shown and described herein, but that numerous variants are possible within the scope of the attached claims that will be obvious to a person skilled in the art. The above-described inventive concepts are illustrated by several illustrative embodiments. It is conceivable that individual inventive concepts may be applied without, in so doing, also applying other details of the described example. A person skilled in the art will understand numerous inventive concepts can be (re)combined in order to arrive at a specific application.

The ordinal numbers used in this document, like "first", "second", and "third" are used only for identification purposes. Expressions like "horizontal", "vertical", and "inclined" are relative expressions with respect to the system 1 components described. By locking in "vertical direction" D2 is therefore meant locking in direction D2, while locking in "horizontal direction" D1 is meant locking in direction D1. The verb "comprise" and conjugations thereof used in this patent publication are understood to mean not only "comprise", but are also understood to mean the phrases "contain", "substantially consist of", "formed by" and conjugations thereof.

A number of implementations have been described. Nevertheless, it will be understood that various modifications may be made without departing from the spirit and scope of the disclosure. Accordingly, other implementations are within the scope of the following claims.

## Claims

1. A system comprising:
an electric vehicle;
a battery unit, configured to be removably arranged on or at least partially in the electric vehicle and configured to be electrically connected to the electric vehicle;
a locking mechanism, configured to mechanically connect the battery unit, when arranged on or in the electric vehicle, to the electric vehicle;
a safety system, comprising:
a first sensor configured to detect whether there is an electrical connection between the electric vehicle and the battery unit;
a controller, configured to:
receive signals from the first sensor;
enable or disable the locking mechanism based on the received signals.

2. The system of claim 1, wherein the controller is further configured to enable the locking mechanism when the received signal indicates that there is no electrical connection between the electric vehicle and the battery unit.

3. The system of claim 1 or 2, wherein the electric vehicle and the battery unit comprise complementary electrical connectors and wherein the first sensor is configured to detect whether the complementary electrical connectors are connected.

4. The system of claim 3, wherein the complementary electrical connectors comprise a at least one shortest pin and wherein the first sensor is configured to detect whether the at least one shortest pin is connected;
wherein the controller is further configured to enable or disable power transfer between the electric vehicle and the battery unit based on the received signals.

5. The system of claim 3 or 4, wherein the complementary electrical connectors comprise at least one longest pin and wherein the first sensor is configured to detect whether the at least one longest pin is connected;
wherein the controller is further configured to enable or disable the locking mechanism based on the received signals.

6. The system of claim 3, 4, or 5, wherein the system further comprises a further locking mechanism configured to mechanically connect the complementary electrical connectors,
wherein the safety system further comprises a second sensor configured to detect whether there is a voltage on the complementary electronical connectors;
wherein the controller is further configured to:
receive further signals from the second sensor;
enable or disable the further locking mechanism based on the received further signals.

7. The system of claim 6, wherein the controller is further configured to enable the further locking mechanism when the received signal indicates that there is no electrical connection between the electric vehicle and the battery unit.

8. The system of claim 3, wherein the safety system comprises a further connector, complementary to either of the complementary electrical connectors of the electric vehicle and the battery unit;
wherein the first sensor is configured to detect connection between the further connector and either of the complementary electrical connectors;
wherein the first sensor detects that there is no electrical connection between the electric vehicle and the battery unit when it detects that there is a connection between the further connector and either of the complementary electrical connectors of the electric vehicle and the battery unit.

9. The system of any one of the preceding claims, wherein the electric vehicle is a truck or an earth mover vehicle, such as an excavator.

10. The system of any one of the preceding claims, wherein the electric vehicle comprises one or more built-in batteries configured to be charged by the battery unit.

11. The system of any one of the preceding claims, wherein the electric vehicle comprises an electric drive and/or one or more electric motors for driving effector arms and/or end effectors.

12. A method for decoupling a battery unit arranged on or at least partially in an electric vehicle, from said electric vehicle, preferably in a system according to any one of the preceding claims, the method comprising:
electrically disconnecting a first electrical connector, being part of either the battery unit or the electric vehicle, from a second electrical connector, being part of the other of the battery unit or the electric vehicle,
detecting, by a first sensor, whether there is no electrical connection between the electric vehicle and the battery unit;
enabling, based on a first signal of the first sensor, a locking mechanism, configured to mechanically connect the battery unit, when arranged on or at least partially in the electric vehicle, to the electric vehicle;
mechanically disconnecting, by the locking mechanism, the battery unit from the electric vehicle.

13. The method of claim 12, further comprising:
detecting, by a second sensor, whether there is no voltage on the first and second electrical connector;
enabling, based on a second signal of the second sensor, a further locking mechanism configured to mechanically connect the complementary electrical connectors;
mechanically disconnecting, by the further locking mechanism, the first and second electrical connector.

14. The method of claim 12 or 13, further comprising:
connecting either one of the first or second electrical connector to a further connector, complementary to either of the complementary electrical connectors of the electric vehicle and the battery unit;
wherein detecting whether there is no electrical connection between the electric vehicle and the battery unit comprises detecting that there is no electrical connection between the electric vehicle and the battery unit when detecting a connection between the further connector and the either one of the first or second electrical connector.

15. The method of any one of the claims 12-14, wherein the electric vehicle is a truck or an earth mover vehicle, such as an excavator.
